# EUROPEAN PATENT SPECIFICATION

(11) **EP 1 942 324 B1**
(45) Date of publication and mention of the grant of the patent: **11.04.2012**
(21) Application number: 08005939.7
(22) Date of filing: 02.09.2004
(51) Int. Cl.: G01L 1/24

(54) **Optical sensor with co-located pressure and temperature sensors**
Optischer Sensor mit benachbarten Druck- und Temperaturfühlern
Capteur optique avec détecteurs co-localisés de pression et de température

(30) Priority: 04.09.2003 US 653996; 04.09.2003 US 499725 P
(43) Date of publication of application: 09.07.2008
(62) Divisional of application: 04783011.2
(73) Proprietor: Baker Hughes Incorporated, Houston, TX 77019 (US)
(72) Inventor: Boyd, Clark D., Radford, Virginia 24141 (US); Childers, Brooks, Christiansburg, Virginia 24073 (US); Zerwekh, Paul S., Shawsville, Virginia 24162 (US); Blevins, Daniel C., Virginia 22980 (US)
(74) Representative: Ramsay, Laura Anne

(56) References cited:
- US-A- 5 345 519
- US-A- 5 528 367
- US-A- 5 682 237
- US-A- 5 870 511
- US-A- 5 907 403
- US-A- 6 016 702
- US-A- 6 056 436
- US-A1- 2002 196 995
- US-B1- 6 567 173

## Description

This present invention relates to optical sensors, and more particularly to fiber optic systems having at least two sensors located proximate to each other.

Optical fibers have become a communication medium of choice for carrying information, in particular for long distance communication because of the excellent light transmission characteristics over long distances and the ability to fabricate optical fibers in lengths of many kilometers. The information being communicated includes video, audio or data. The ability to transmit data signals is utilized in applications where the optical fibers are used as sensors. These sensors can be used to detect physical or environmental conditions including pressure, temperature, position, vibration, acoustic waves, chemicals, current, electric field and strain, among other properties. The information obtained can be used in system control and calibration, and is conveyed by polarization, phase, frequency, wavelength and intensity modulation.

Optical sensors can replace conventional sensors, such as resistance gages, thermocouples and electric or electronic gauges, because optical sensors provide immunity to electromagnetic interference and leakage-to-ground problems. Optical sensors also eliminate inaccuracies associated with long, multiple, signal lead requirements, and enjoy compact size, light weight, high sensitivity and large scale multiplexing.

Known optical sensor geometries include Fabry-Perot, Bragg-grating, Mach-Zehnder, Michelson and Sagnac, among others. If all of the sensing occurs within the optical fiber, the optical sensor is an intrinsic fiber; therefore, the fiber acts as both a transmission medium and a sensing element. If the fiber does not act as a sensing element but merely acts as a transmission medium, the optical sensor is classified as an extrinsic sensor. In an extrinsic optical sensor, the optical fiber transmits the light source to an external medium, for example air, where the light is modulated to provide the desired sensing or detection. Optical sensors are also classified by the optical principle which they operate. Interferometric optical sensors utilize interference patterns between source light beams and reflected beams. Intensity based sensors measure the light lost from the optical fiber.

One type of optical sensor is the extrinsic Fabry-Perot interferometer ("EFPI"). An EFPI utilizes two reflective surfaces and the difference or shift between a reference beam and a reflected beam directed through an optical fiber. This phase shift is used to determine or calculate the desired physical or environmental characteristic.

Optical sensors can be used in manufacturing, aerospace applications, civil engineering applications and medical applications. In the petroleum industry, for example, it is important from at least a safety and environmental standpoint to obtain accurate pressure information during, for example, the drilling of an oil well, because the drill bit may drill into a high pressure layer. Optical sensors are lowered into the oil wells during drilling and completion of oil wells to communicate pressure information from various depths within the wells.

Co-locating dual optical sensors have been discussed in the patent literature. For example, both Unites States patent numbers 5,682,237 and 6,671,055 B1 disclose interferometric spectrum from etalons of reflected light portions from co-locating sensors. Such application has not extended into the petroleum industry due to the severe environment encountered downhole. For example, United States patent number 6,563,970 B 1 discloses an optical sensor for use in an oil and gas well that requires a complex pressure transducer to apply downhole pressure to either elongate or compress a fiber having a Bragg grating thereon.

Additionally, known EFPI sensors used in petroleum drilling only measure one parameter, *e*.*g*., either temperature or pressure. However, the temperature within an oil well increases with increasing depth, and optical sensors are susceptible to temperature changes. Failure to account for these temperature changes can lead to inaccurate pressure readings.

Therefore, the need exists for a suitable optical sensor that detects both pressure and temperature in wellbores to provide correction of pressure measurements based upon the measured temperature. US-6056436 describes simultaneous measurement of temperature and strain using optical sensors.

According to the present invention there is provided an optical sensor as defined by claim 1.

The present invention is directed to an optical sensor adapted for use in the oil and gas wells that has at least two sensing regions. Each sensing region preferably measures one environmental condition, *e.g.*, pressure, temperature, tilt angle of the well bore, position, vibration, acoustic waves, chemical, chemical concentrations, current, electric field and strain, among other properties. The two or more sensing regions are located proximate to each other so that the measured environmental conditions are at substantially the same depth. Each sensing region may include an intrinsic type sensor or an extrinsic type sensor or both.

The present invention is directed to an optical sensor comprising at least two sensing regions located proximate to each other. One of the sensing regions is a pleasure sensing region and comprises a sealed cavity having a first and second reflecting surfaces. The distance between the first and second reflecting surfaces changes in response to a change in pressure, and a first reflected light and a second reflected light from these two reflecting surfaces form an interferometric signal representative of a pressure at the location of the optical sensor.

A launch waveguide is operatively connected to the sealed cavity and projects light into the sealed chamber. The sealed cavity can comprise a ges or can be a partial vacuum. The partial vacuum can be provided by vacuum fixturing process or by gas diffusion process.

The other sensing region of the optical sensor is a temperature sensing region, which preferably comprises a temperature sensitive material. The temperature sensing region comprises a third reflecting surface, The second reflected light and a third reflected light from the third reflecting surface form an interferometric signal representative uf a temperature at the location of the optical sensor. In one embodiment, the temperature sensing region further comprises a fourth reflecting surface and wherein a third reflected light and a fourth reflected light from the third and fourth reflecting surfaces form an interferometric signal representative of a temperature at the location of the optical sensor. The first and second reflecting surfaces can be connected to the third and fourth reflecting surfaces by a reflective waveguide.

The temperature sensing region can be located within the sealed cavity or can form a part of the wall of the cavity.

The sealed cavity has a unitary construction and is defined by a tube fused to the launch waveguide and to a capillary tube. Preferably, the tube and the capillary tube are made from materials having similar coefficient of thermal expansion, or from the same material to compensate for the thermal expansion on the distance between the first and second reflecting surfaces. A temperature sensing material can be disposed inside the capillary tube. The capillary tube may comprise a hollow portion to minimize reflected light. Alternatively, the distal end of the capillary tube is modified to minimize reflected light.

Light from the launch waveguide can propagate through the temperature sensing region before propagating through the pressure sensing region, and vice versa. One of the first and second reflecting surfaces can be coated with an optical coating. Alternatively, both of the reflecting surfaces are coated with different optical coating.

Some preferred embodiments of the present invention will now be described, together with other arrangements given for illustrative and reference purposes only, with reference to the accompanying drawings.

In the accompanying drawings, which form a part of the specification and are to be read in conjunction therewith and in which like reference numerals are used to indicate like parts in the various views:
Fig. 1 is a cross-sectional view of an optical sensor constructed in accordance with an illustrative arrangement;
Fig. 2 is an enlarged view of the interface between the launch and reflective fibers of the optical sensor of Fig. 1;
Fig. 3 is an enlarged view of an end of the reflective fiber of the optical sensor of Fig. 1;
Figs. 4 A-D illustrate the formation of an optical sensor in accordance with another illustrative arrangement;
Fig. 5 is an enlarged view of the interface between the launch and reflective fibers of the optical sensor of Fig. 4D;
Figs. 6A-B illustrate another optical sensor for illustrative and reference purposes only;
Fig. 7 is a doss-sectional view of another optical sensor for illustrative and reference purposes only showing dual cavities;
Figs. 8A-D illustrate the formation of another dual cavity optical sensor for illustrative and reference purposes only;
Fig. 9 is a cross-sectional view of another optical sensor;
Fig. 10 is a cross-sectional view of another optical sensor;
Fig. 11 is a cross-sectional view of an optical sensor according to an embodiment of the present invention;
Fig. 12 is a efoss-sectional view of another optical sensor according to another embodiment of the present invention;
Fig. 13 illustrates schematically a fiber optic system incorporating the optical sensors of the present invention;
Fig. 14 is a graph indicating spectral data taken by a sensor of Fig. 1;
Fig. 15 is a graph of the spectral data of Fig. 10 converted by Fourier transform;
Fig. 16 is a graph of the spacing of reflective surfaces versus pressure;
Fig. 17 is a graph of the pressure gap versus pressure at various temperatures;
Fig. 18 is a graph of pressure error versus pressure for several temperatures; and
Fig. 19 is a graph of temperature gap versus temperature for a pressure independent temperature measurement.

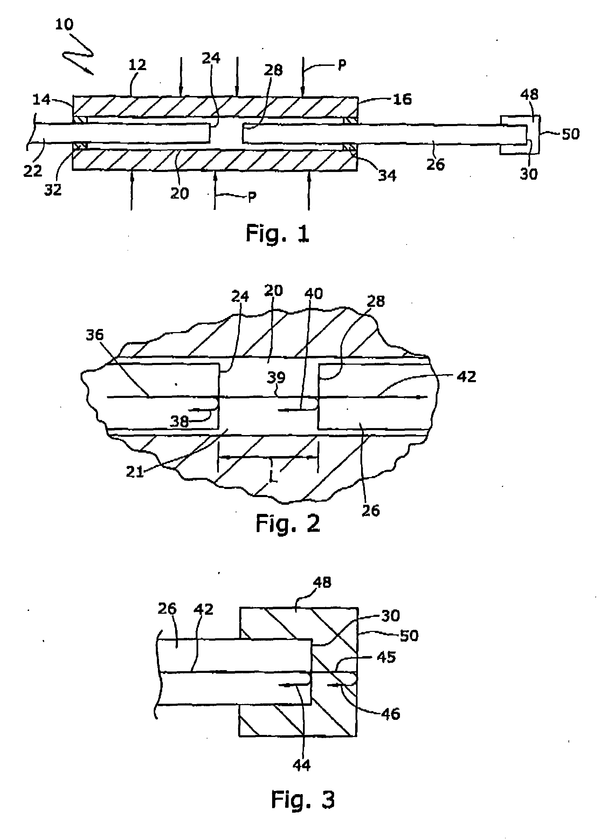

Referring initially to Figs. 1-5, there is shown an optical sensor10, for illustrative and reference purposes only, which includes tube 12, which has first end 14 and second end 16 and relatively thick wall 18 extending between the two ends. Tube 10 defines cavity 20 therewithin. At least one input/output or launch waveguide or fiber 22 is inserted into cavity 20 at first end 14 and reflective waveguide or fiber 26 is inserted into cavity 20 at second end 16. The term "waveguide" and "fiber" are used interchangeably herein and include, but are not limited to, any optical fiber, optical waveguide, fiber core, fiber core plus cladding and any optical structure capable of transmitting light. First end 24 of launch fiber 22 is spaced apart from first end 28 of reflective fiber 26 by spatial gap 21 having a length "L". Second end 30 of reflective fiber 26 is attached to cap 48. Cap 48 contains a temperature sensitive material therewithin and has distal end 50. Although cavity 20 and gap 21 illustrate an EFPI and cap 48 illustrates a particular temperature sensor, these sensors are used for illustration purpose only.

Launch fiber 22 is capable of transmitting multiple wavelengths of light along its length in both directions. Suitable materials for launch fiber 22 include a single mode fiber, a multimode fiber, a polarization maintaining fiber or a plastic fiber, among others. The length of launch fiber 22 is selected based upon the particular application and the distance to the depth being measured, *e*.*g*., the distance down an oil or gas well. Fiber 22 can have any diameter suitable for the particular application. In one non-limiting example, the diameter can be from about 60µm to about 250µm, and preferably it is about 125µm.

Suitable materials for reflecting fiber 26 include a coreless fiber, a single mode fiber, a multimode fiber, a polarization maintaining fiber and a plastic fiber. Preferably, the length of reflective fiber 26 is relatively short, so that the temperature sensor or cap 48 attached to second end 30 of reflective fiber 26 is located proximate to the pressure sensor located in tube 12. Fiber 26 may have the same diameter as fiber 22 or different diameter.

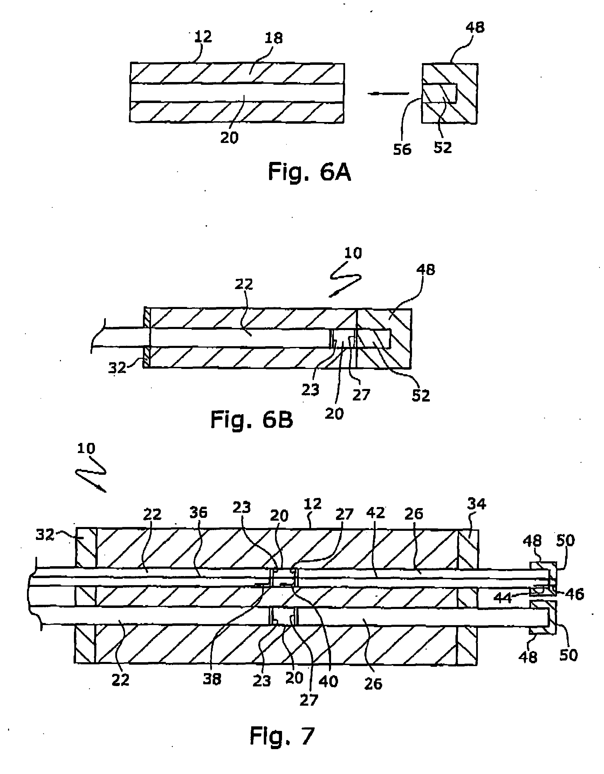

First end 24 of launch fiber 22 and/or first end 28 of reflective fiber 26 can be modified to simulate or provide additional optics or optical effects. For example, first ends 24 and 28 can be modified to form or function as one or more lenses, providing a wider range of useful gaps 21. In addition, optical coatings 23 and 27 as shown in Figs. 6 and 7 can be applied to launch fiber first end 24 and reflective fiber first end 28, respectively. Optical coatings 23 and 27 enhance the spectral characteristics so that demodulation of the gap information may be more accurately and more easily accomplished. Optical coatings can be used to increase the finesse of cavity 21, *i.e*., changing the shape or curves of a particular reflected light portion to distinguish it from the other reflected light portions, and to allow wavelength division multiplexing. Suitable materials for the optical coatings include, but are not limited to, magnesium fluoride, metal oxides (such as silicon monoxide, zirconium oxide, tantalum oxide, niobium oxide, silicon carbide, aluminum oxide, *etc.*), silicon, gold, aluminum; titanium, nickel, chromium and combinations thereof. Optical coatings 23 and 27 can be made from the same material, and preferably from different materials.

To control length "L" of gap 21, launch fiber 22 can be attached to tube 12 at first end 14 by one or more first bonds 32. Similarly, reflective fiber 26 can be attached to tube 12 at second end 16 by one or more second bonds 34. Such an arrangement is outside the scope of the present invention. Launch fiber 22 and reflective fiber 26 can extend into cavity 20 and at least a portion of launch fiber 22 and a portion of reflective fiber 26 are disposed within cavity 20. Length "L" of gap 21 can be defined as the distance between launch fiber 22 and reflective fiber 26 within cavity 20 or as the distance between the two first ends 24 and 28.

Referring to Fig. 2, light from a light source located on the surface near the wellhead propagates through launch fiber 22, and exits first end 24 and enters gap 21 of cavity 20. Light includes any wavelength in the electromagnetic spectrum, including but not limited to broadband, lasers, visible light, non-visible light. Initial light portion 36 is transmitted through launch fiber 22. As initial light portion 36 contacts the interface at first end 24 between launch fiber 22 and gap 21, a portion, for example approximately four percent, of initial light portion 36 is reflected back down launch fiber 22 as first reflected light portion 38. First reflected light 38 has the same properties as initial light 36 and is essentially the reference light. The percentage of reflected light is a function of material properties and dimensions, and the actual reflected percentage changes accordingly. First remaining light portion 39 propagates through gap 21. At the interface at first end 28 between gap 21 and reflecting fiber 26, another portion, for example approximately four percent, is reflected back as second reflected light portion 40. Second remaining light portion 42 propagates through reflective fiber 26.

Referring to Fig. 3, second remaining light portion 42 propagates down reflecting fiber 26 toward second end 30. At the interface at second end 30 between reflective fiber 26 and temperature sensitive cap 48, another portion, for example approximately sixteen percent, is reflected back along reflective fiber 26 as third reflected light portion 44. Third remaining light 45 travels through cap 48. At distal surface 50 of cap 48, another portion, for example approximately sixteen percent of light, is reflected back as fourth reflected light portion 46. The temperature sensitive material can also have a metallic layer (not shown) disposed adjacent cap 48.

The reflected light portions 38, 40, 44 and 46 produce an interferometric signal, which can be processed to yield the measured properties, *e.g.,* pressure and temperature, discussed in details below. An example of such interferometric signal is disclosed in United States patent number 6,671,055 B 1. Furthermore, as discussed above it is noted that percentage of reflected light is determined by the ratio of the index of refraction of the temperature sensitive material to the index of refraction of the surrounding medium. Hence the exemplary percentages of reflected light portions provided above are for illustration purpose only.

As optical sensor 10 descends into a well, pressure "P" (shown in Fig. 1) is uniformly exerted along the entire exterior of tube 12. As pressure "P" increases, the exterior is pushed inwardly, changing gap 21 of cavity 20. In particular, the pressure increases (with increasing depth from the surface) length "L" of gap 21 decreases. This change in length "L" is used to calculate the pressure at any point within the well. In one embodiment, length "L" of spatial gap 21 is pre-determined to correspond to a pre-determined pressure. Specifically, the initial length of gap 21 is chosen so that interferometric measurement of the optical displacement between the launch fiber first end 24 and a reflective surface corresponds to a known pressure, such as, for example, standard pressure of 14.7 pounds per square inch (psi) or 101 kPa. Gap 21 can be a partial-vacuum, and may contain an inert gas or air. The residual gas can be removed by vacuum fixturing, gas diffusion process or other known techniques. In the gas diffusion process, cavity 20 is filled with helium (He) and as helium diffuses from the cavity a partial vacuum is formed within gap 21. In vacuum fixturing, cavity 20 is in fluid communication with a capillary tube, and the gas in cavity 20 can be withdrawn through the tube and the tube is sealed or pinched to maintain the partial vacuum in the cavity.

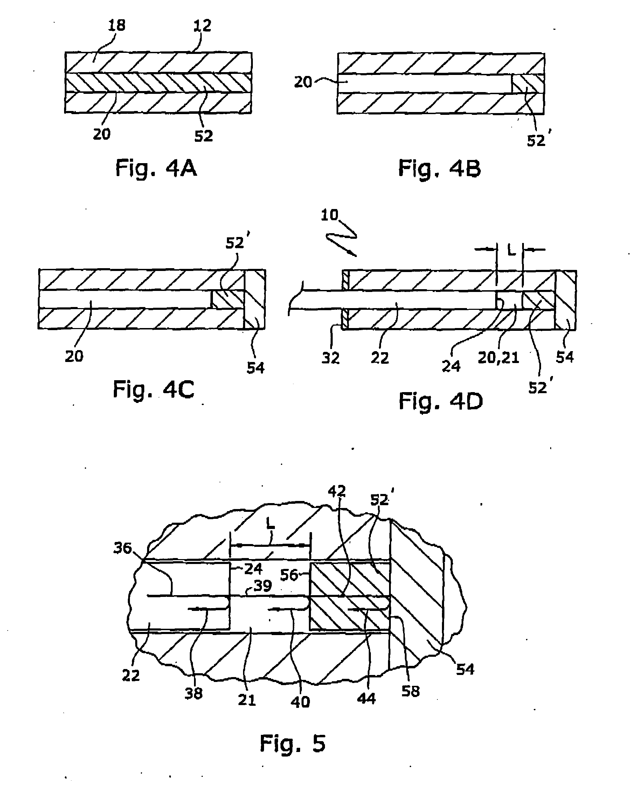

As was discussed previously, end cap 48 is formed of a material 52, as shown for example in Figs. 4a-4d, that exhibits a changing refractive index with changing temperature. Thus, as optical sensor 10 descends from the surface, the refractive index of cap 48 changes with the increasing temperature, thus altering the optical displacement between second end 30 and distal cap surface 50 as shown in Fig. 3. The difference in the optical displacements at the earth's surface and at some depth below the surface is equated with a temperature at that depth. Knowing the temperature at a given depth allows for the correction of the pressure calculations to more accurately portray the pressure at that same depth and for the correction of thermal apparent error. Alternatively, the temperature sensitive material can be viewed as a filter having a wavelength that changes with temperature.

Temperature sensitive material 52 in cap 48 can be constructed from any material, or combination of materials, that exhibits a changing optical path resulting from changing index of refraction and/or coefficient of thermal expansion with changing temperature. In other words, as the index of refraction changes the speed of light through the medium also changes resulting in a phase change. This phase change causes a change in the interference of the reflected light at the temperature material with the reflected light at the pressure gap, which is the readable interferometric result. As used herein, with respect to temperature sensitive materials, the optical displacement of a material refers to the effect of the index of refraction of that material on the speed of light propagating through the material. Suitable temperature sensitive materials include, but are not limited to, silicon, sapphire, silicon carbide (SiC), tantalum oxide (Ta₂O₅) and others, such as metal oxides. Such temperature measurement is disclosed in, J. Sotomayor and G. Beheim, "Laser-Annealed Fabry-Perot Fiber-Optic Temperature Sensor" published in SPIE Vol. 2070-Fiber Optic and Laser Sensors XI (1993).

Hence, in the embodiment of Figs. 1-3, one sensing region includes the pressure measurement resulting from first reflected light 38 and second reflected light 40, *i.e.,* gap 21, and the other sensing region includes the temperature measurement resulting from third reflected light 44 and fourth reflected light 46, *i.e.,* end cap 48.

At least one of launch fiber 22, reflecting fiber 26, tube 12, cap 48 and other components comprises a coating arranged to shield the fiber or tube from moisture or other contaminant to improve stability and reliability. Suitable coatings include xylylene (available as Parylene®), carbon, titanium oxide and combinations thereof.

Sensor 10 can be manufactured by many techniques and have other configurations. Another exemplary, non-limiting technique is illustrated in Figs 4A-4D and 5. Tube 12 with wall 18 and cavity 20 can be constructed from any material that deforms when exposed to increasing pressure, preferably within the pressure range that sensor 10 operates. Suitable materials for tube 12 include metal, polymer, sapphire, alumina, and combinations thereof. Tube 12 can be extruded, drawn or pierced. Although cavity 20 can be arranged to have any shape desired, cavity 20 is generally cylindrical in shape, and tube 12 may contain more than one cavity 20. Cavity 20 should have an inner diameter that can accommodate both launch fiber 22 and reflective 26. Temperature sensitive material 52 is inserted into cavity 20, as illustrated in Fig. 4A. The temperature sensitive material is etched down to a remaining portion 52', as illustrated in Fig. 4B. When temperature sensitive material 52 is silicon, potassium hydroxide (KOH) can be used as the etching medium.

Disk 54 is then attached to tube 12 and is flushed with remaining temperature sensitive material 52', as illustrated in Fig. 4C. Disk 54 can be attached by any means, such as, laser welding or solder glass. Disk 54 can be made from a similar material as tube 12. Thereafter, launch fiber 22 is inserted into cavity 20 until first end 24 of launch fiber 22 is spaced apart at length "L" in spatial gap 21 from remaining temperature sensitive material 52', as illustrated in Fig. 4D. Hence, the sensor 10 shown in Figs. 4A-4D differs from the sensor shown in Figs. 1 in that the temperature sensitive material is protected inside tube 12 and that reflective fiber 26 is also omitted. Launch fiber 22 may include optical coating 23, and temperature sensitive material 52, 52' may include an optical coating 27 as shown in Figs. 6b and 7.

The optical path of the arrangement of Figs. 4A-4D is shown in Fig. 5. Initial light portion 36 propagates along launch fiber 22 and is partially reflected at first end 24 of fiber 22. First reflected light 38 is reflected back in the opposite direction along launch fiber 22. First remaining light portion 39 propagates through spatial gap 21 and is partially reflected at first end 56 of temperature sensitive portion 52'. Second reflected light 40 is reflected back through gap 21. Second remaining light 42 propagates through temperature sensitive portion 52' and is partially reflected at second end 58 as third reflected light portion 44. Again, the reflected light portions produce an interferometric signal, which can be interpreted to yield the measured properties, *e.g*., pressure and temperature, discussed in details below.

Hence, in the arrangement of Figs. 4A-4D and 5, the first sensing region includes the pressure measurement resulting from first reflected light 38 and second reflected light 40 and the other sensing region includes the temperature measurement resulting from second reflected light 40 and third reflected light 44.

Another sensor 10 is shown in Figs. 6A-6B. Optical sensor 10 includes cap 48 that is separate from and independent of tube 12. Cap 48 has a cavity that contains temperature sensitive material 52. Temperature sensitive material 52 is lapped down flat so that leading first end 56 is generally flat and aligned with cap 48's edge. Cap 48 is bonded to tube 12 so that temperature sensitive material 52 is exposed to tube cavity 20. Suitable methods for bonding cap 48 to tube 12 are the same as those for attaching disk 54 to tube 12. In this arrangement, launch fiber 22 is inserted into the cavity 20 in a similar manner as the arrangement of Figs 4A-4D to create gap 21 and is secured and bonded in that position by bond 32 or 34. The optical path of the arrangement of Figs 6A-6B is substantially similar to that of the arrangement of Figs. 4A-4B.

Although illustrated above in Fig. 1 with a single set of gap 21, launch fiber 22, temperature sensitive material 52 and reflecting fiber 26, sensor 10 can include two or more sets of launch fibers, gaps, temperature sensitive materials and reflecting fibers. Referring to Fig. 7, optical sensor 10 includes two launch fibers 22 fixedly secured within two spaced apart cavities 20 of tube 12. Alternatively, launch fibers 22 can be disposed within a single cavity 20. Two reflecting fibers 26 can be securely attached to tube 12 creating a pair of gaps 21. Launch fibers 22, reflective fibers 26 and gaps 21 can be identical to provide redundancy or can be different to provide for comparative measurements. For example, optical sensor 10 can be formed with two pressure gaps of different initial lengths and two temperature sensitive materials of different optical lengths (or of different materials). The lengths differ by a pre-determined ratio. By forming the optical sensor 10 in this manner, additional information can be obtained from the sensor. Reflective caps 48 are provided at each second end 30 of reflecting fibers 26 and can be constructed from the same temperature sensitive material or different temperature sensitive materials .

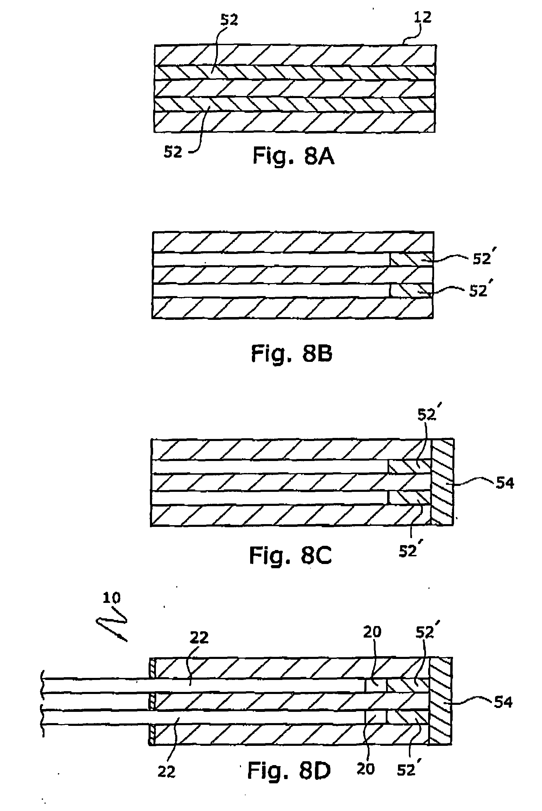

Another sensor 10 utilizing two or more sets of sensing regions is illustrated in Figs. 8A-D. This sensor is similar to the single cavity sensor of Figs. 4A-4B, except that tube 20 has two cavities 20. Each cavity 20 of tube 12 is filled with temperature sensitive material 52, and temperature sensitive material is etched down as was done with the single cavity embodiment. Disks 54 are bonded to tube 12 at the end where the temperature sensitive materials 52' are located (Fig. 8C). Then, launch fibers 22 are inserted into cavities 20 and bonded into place. As was described above, temperature sensitive materials 52 and lengths "L" of gaps 21 can be the same or different.

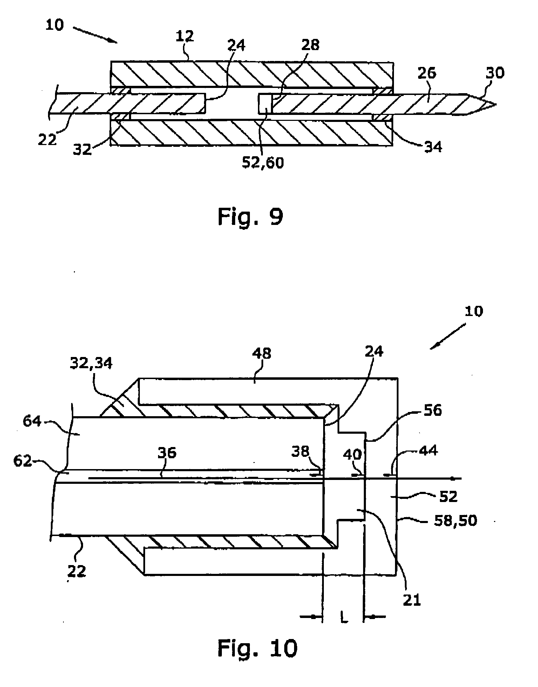

Fig. 9 illustrates another of sensor 10. In this sensor, temperature sensitive material 52 is disposed in cavity 20 and at first end 28 of reflecting fiber 26, and can be arranged as chip 60. Suitable materials for chip 60 include silicon and the other temperature sensitive materials discussed above. In addition , second end 30 of reflecting fiber 26 can be modified, such as bent, tapered, angled, crushed or polished, to reduce or to minimize any additional, unwanted reflections from the far end of reflecting fiber 26 that may increase errors in the demodulation calculations. The optical path is similar to that of the arrangement of Figs. 4A-4D and 5, *i.e.,* based on three reflected light portions. Alternatively, sensor 10 can be made from a metal such as titanium (Ti). More particularly, tube 12 and member 26 are made from a metal and are welded together at joint 34, and launch waveguide 22 can be encased or protected by a metal sheath, which can be welded to metal tube 12 at joint 32. A metal construction can advantageously higher pressure.

In another optical sensor 10 illustrated in Fig. 10, cap 48 is attached directly to launch fiber 22 and is constructed from temperature sensitive material 52, preferably silicon. Launch fiber 22 can be attached to cap 48 by bond 32 or 34, or by using molecular, epoxy, or anodic attachment mechanisms. Launch fiber 22 can include core 62 surrounded by cladding 64. Cap 48 is configured such that gap 21 is formed between first end 24 of launch fiber 22 and leading or first edge 56 of temperature sensitive material 52. Length "L" of gap 21 is the same as other arrangements described above. In addition, the thickness of cap 48 between first end 56 and second end 58 (which in this embodiment is the same as distal cap surface 50) of temperature sensitive material 52 is selected so that the end of cap 48 acts like a pressure sensitive diaphragm configured to flex due to the pressure acting upon distal cap surface 50 for the pressure ranges in which optical sensor 10 is deployed. Flexing of this diaphragm causes a change in length "L" of gap 21.

In the sensor of Fig. 10, initial light portion 36 is transmitted down core 62, and first reflected light portion 38 is reflected back through core 62 at first end 24 of launch fiber 22. Similarly, second reflected light portion 40 is reflected at first end 56 of temperature sensitive material 52 back through core 62. Length "L" is known at standard pressure, and external pressure applied to distal cap surface 50 flexes the pressure sensitive diaphragm and changes length "L" of gap 21, resulting in a change in the interference pattern between first reflected beam 38 and second reflected beam 40. This change in interference pattern is used to calculate the external pressure applied to cap surface 50.

In addition, third reflected light portion 44 is reflected at second end 58 of temperature sensitive material 52 (or distal cap surface 50) back through core 62. The amount of time that it takes for light to pass through temperature sensitive material 52 changes with the refractive index of the material, which changes with temperature. Therefore, as the temperature in which optical sensor 10 is located changes, the interference pattern between third reflected light portion 44 and either first reflected light portion 38 or second reflected light portion 40 changes. This change is used to calculate the ambient temperature.

The optical path of this arrangement is similar to that of the arrangement of Figs. 4A-4B, except that a single sensing element, the pressure sensitive diaphragm at distal end 50 of cap 48, measures both the pressure and temperature.

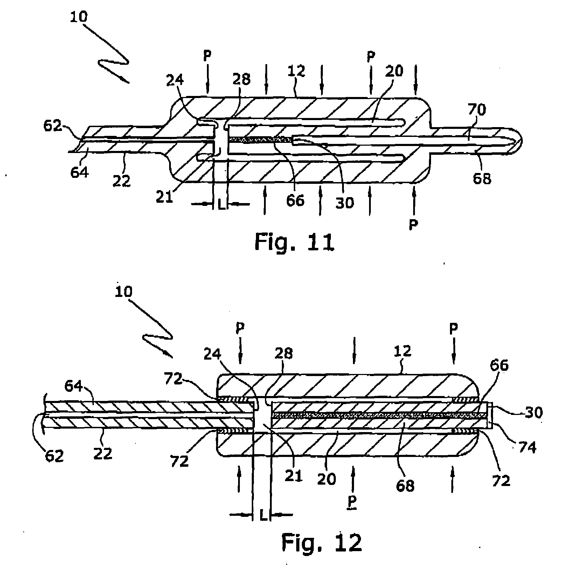

In an embodiment of the present invention illustrated in Fig. 11, optical sensor 10 is constructed without using bond 32 or 34. Optical sensor 10 has a unitary construction and comprises launch fiber 22, gap 21 having length "L", and a length of temperature sensitive waveguide or fiber 66 disposed inside capillary tube 68. Launch fiber 22 has core 62 and cladding 64. Both cladding 64 of launch fiber 22 and capillary tube 68 are fused to tube 12 to provide the unitary construction. Similar to the sensor of Figs. 1-3, tube 12 defines cavity 20 and both launch fiber 22 and capillary tube 68 partially extend into cavity 20. Preferably, capillary tube 68 extends into cavity 20 along most of the length of cavity 20, as shown, and both tube 12 and capillary tube 68 are made from the same material. When both tube 12 and capillary tube 68 are made from the same material and have the same coefficient of thermal expansion, tube 12 and capillary tube 68 thermally expand at substantially the same amount, thereby minimizes the effect caused by differential thermal expansion on the changes of length "L" of gap 21. Hence, changes in length "L" would be caused primarily by changes in pressure. Preferably, tube 12 and capillary tube 68 are made from fused silica. Preferably, fiber 66 is made from a fused silica based fiber which has sufficiently high dN/dT (change in index of refraction/change in temperature) for temperature sensing.

Similar to the other arrangements described above, initial light 36 propagates along core 62 of launch fiber 22 and at first end 24, first reflected light portion 38 propagates back along core 62. Across gap 21, second reflected light portion 40 is reflected back at first end surface 28 of waveguide 66. The transition from solid waveguide 66 to hollow portion 70 of capillary tube 68 provides reflective surface 30 for third reflected light 44 to reflect back. Hollow portion 70 absorbs the remaining light to minimize additional unwanted reflection and the distal end of capillary tube 68 is bent, tapered, angled or otherwise modified to absorb additional light. As discussed before, reflected light portions 38 and 40 produce interferometric signals to provide pressure measurements, and reflected light portions 40 and 44 produce interferometric signals to provide temperature measurements.

In the embodiment of Fig. 11, an intrinsic Fabry Perot interferometer or IFPI (temperature sensitive waveguide or fiber 66 disposed inside capillary tube 68) is incorporated to an EFPI (gap 21) to form a co-located dual sensor. This embodiment allows the IFPI to be sufficiently short for non-aliased interrogation, allows non-adhesive attachment of the temperature sensor to the pressure sensor and retains the pressure insensitivity of the sensor. Depending on the laser system used, the IFPI can be less than about 5 mm.

Fig. 12 illustrates another sensor 10, which is a variation of the embodiment of Fig. 11. In this embodiment, sensor 10 also comprises an IFPI temperature sensor incorporated to an EFPI pressure sensor. Tube 12 is fusion bonded to cladding 64 of launch fiber 22 and to capillary tube 68 at fusion joints 72. Similar to the embodiment of Fig. 11, this sensor has a unitary construction since tube 12 is fused to launch fiber 22 and capillary tube 68, and instead of employing hollow section 70 to reduce further reflection after second reflective surface 30, in the embodiment of Fig. 12 capillary tube 68 cleaved, polished or coated with a metal, e.g., gold (Au) at end 74 after second reflective surface 30 to minimize additional reflection. Additionally, since hollow section 70 is not used more temperature sensitive fiber 66 can be used. Sensor 10 of this embodiment can also be made from metal similar to sensor 10 of Fig. 9, discussed above.

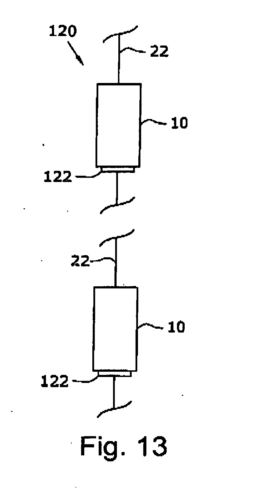

With reference to Fig. 13, a fiber optic sensor system 120 is described. The fiber optic sensing system 120 includes a plurality of optical sensors 10 mounted to launch fiber 22. A tap 122 can be included with each sensor 10 to redirect any unreflected light to the next sensor 10 along launch fiber 22. In this way, it is possible to string a plurality of sensors 10 along launch fiber 22 to make temperature and pressure measurements at various locations along the well bore.

An exemplary method of operating sensor 10 of the present invention is described below. Using co-located pressure and temperature sensor 10, pressure at a particular depth below the surface can be calculated through the measurement of the optical displacements resulting from a change in the physical distance between the first pair of reflection points when the index of refraction remains the same. Further, this pressure calculation can be modified to take into account a change in temperature experienced at that particular depth below the surface. The modification is accomplished by measuring the optical displacements resulting when the physical distance between the second pair of reflection points remains largely unchanged due to the pressure, but the index of refraction is altered.

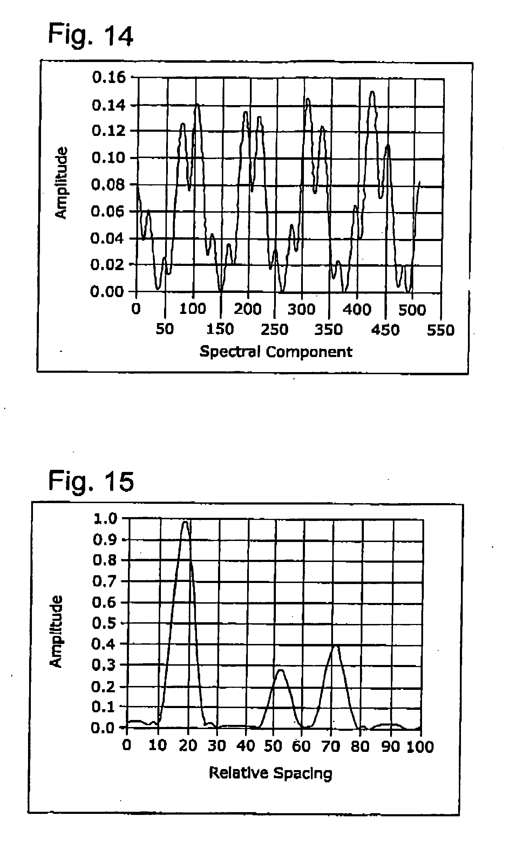

Optical sensor 10 provides sets of reflective surfaces, the optical path between which change with the application of pressure and temperature. Light reflected from sensor 10 interferes, and optically generates interferometric patterns/signals. An example of the interferometric spectrum is shown in Fig. 14. This interferometric spectrum is demolulated mathematically through known signal transformation techniques such as Fourier transform techniques or other mathematical processes. Alternately, the interferometric spectrum may be demodulated optically using known optical path-length matching techniques.

The demodulated spectrum is shown in Fig. 15. The tip of each peak is the approximate measured optical path length of each sensor signal. The peaks indicate the spacing locations of the reflective surfaces of optical sensor 10. As shown in Fig. 15, the locations of the reflective surfaces are at about 18, 53 and 71 on the horizontal axis.

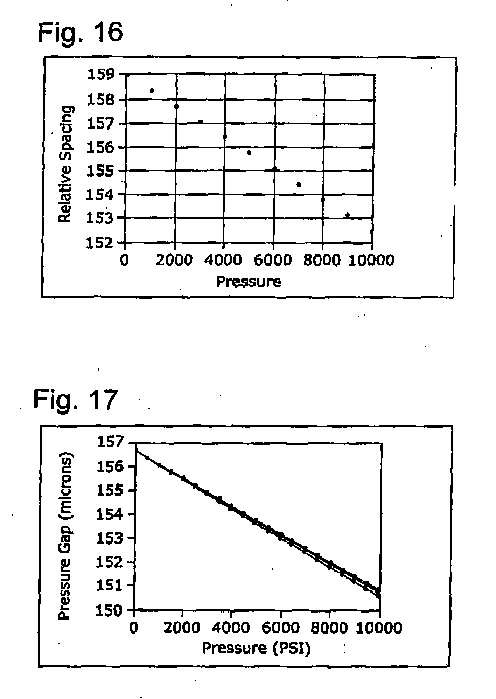

The measured spacings are then converted to pressure and temperature measurements using a calibration of optical sensor 10 over pressure and temperature. A calibration of the sensor over pressure and temperature is conducted and subsequently the locations of the reflective surfaces can be converted to pressure and temperature. A plot of detected pressure versus spacing based on these peaks is illustrated in Fig. 16. Since the pressure gap measurement is dependent on temperature, this temperature dependence is preferably determined and accounted for in the pressure calculations as discussed below.

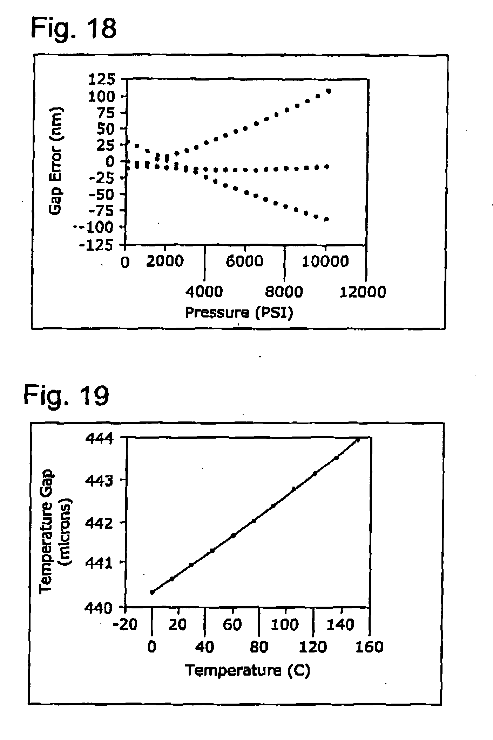

Referring to Fig. 17, measured pressure gap 66 is plotted versus pressure for three different temperatures, *e.g*., 0°C, 75°C, 150°C. Any temperatures and any number of temperature curves can be used. As shown, the three plots for the three temperatures do not overlap but diverge, particularly at higher pressures. This represents a family of pressure curves as functions of pressure gap and temperature. The error in gap length is illustrated in Fig. 18. Gap error 68 resulting from the change in temperature is calculated from a best fit straight line of the data and plotted against pressure 62. A sensitivity of about 0.5 nm/psi yields an error of plus or minus 200 psi (1.4 MPa). Therefore, a plurality of temperature dependent pressure calibration curves are needed to correct for these gap errors, such as those shown in Fig. 17. Once the temperature at the location of the pressure measurement is determined, then the appropriate pressure calibration curve is selected. The selected pressure calibration curve is then used to determine the pressure associated with the measured pressure spacing. Alternatively, if the measured temperature does not match one of the curves, then two adjacent curves that bracket are chosen, and the pressure reading is obtained by interpolation between these curves.

Preferably, a pressure independent temperature measurement from optical sensor 10 is used. This temperature measurement can be carried out at the ground surfaces and at known temperature, *e.g.,* by measuring the changes in optical length between surfaces 30 and 50 as shown in Fig. 3. Fig. 19 illustrates a suitable plot of measured temperature gap 70 versus temperature 72 for a pressure independent temperature measurement. In one non-limiting example, sensor 10 has a temperature range of 0-150°C, and a pressure range of 0-10,000 psi (0-69 MPa).

## Claims

1. An optical sensor comprising at least two sensing regions located proximate to each other, wherein:
one of the sensing regions is a pressure sensing region and comprises a sealed cavity (20,21) defined by a tube (12) and having a first and a second reflecting surface (24,28), wherein the distance between the first and second reflecting surfaces (24,28) changes in response to a change in pressure, and wherein a first reflected light (38) and a second reflected light (40) from said reflecting surfaces (24, 28) form an interferometric signal representative of a pressure at the location of the optical sensor;
**characterised in that**:
the optical sensor has a unitary construction comprising a launch waveguide (22) operatively connected to the sealed cavity (20,21) for projecting light into the sealed chamber (20,21) and a capillary tube (68) partially extending into the cavity (20,21), said tube (12) being fused to the launch waveguide (22) and to the capillary tube (68); and
the other sensing region is a temperature sensing region disposed inside the capillary tube (68), wherein the temperature sensing region comprises a third reflecting surface (30) and the second reflected light (40) and a third reflected light (44) from the third reflecting surface (30) form an interferometric signal representative of a temperature at the location of the optical sensor.

2. The optical sensor of claim 1, wherein the temperature sensing region is located within the sealed cavity (21).

3. The optical sensor of claim 1 or 2, wherein the temperature sensing region is made from a temperature sensitive material.

4. The optical sensor of claim 3, wherein the temperature sensitive material forms a part of the cavity wall.

5. The optical sensor of any preceding claim, wherein the temperature sensing region comprises a temperature sensitive waveguide or fiber (66) disposed inside the capillary tube (68).

6. The optical sensor of claim 5, wherein the temperature sensitive fiber (66) is made from a fused silica based fiber.

7. The optical sensor of any preceding claim, wherein the sealed cavity (21) is defined by the tube (12), the launch waveguide (22) and a distal member and wherein the tube (12) is sealed to the distal member.

8. The optical sensor of any preceding claim, wherein said cavity (21) comprises a gas or a partial vacuum.

9. The optical sensor of any preceding claim, wherein the tube (12) and the capillary tube (68) are made from materials having similar coefficient of thermal expansion.

10. The optical sensor of claim 9, wherein the tube (12) defines a cavity (20) and both the launch waveguide (22) and the capillary tube (68) partially extend into the cavity (20).

11. The optical sensor of claim 9 or 10, wherein the length that the capillary tube (68) extends inside the cavity (20) is substantially close to the length of the cavity (20) to compensate for the thermal expansion on the distance between the first and second reflecting surfaces (24, 28).

12. The optical sensor of claim 9, 10 or 11, wherein the tube (12) and capillary tube (68) are made from the same material.

13. The optical sensor of claim 12, wherein the tube (12) and capillary tube (68) are made from fused silica.

14. The optical sensor of any preceding claim, wherein the capillary tube (68) further comprises a hollow portion (70).

15. The optical sensor of any preceding claim, wherein the distal end of the capillary tube (68) is modified to minimize reflected light.

16. The optical sensor of claim 15, wherein the distal end of the capillary tube (68) is cleaved, tapered, bent, angled or polished.

17. The optical sensor of claim 15, wherein the distal end (74) of the capillary tube (68) is coated with a metal.

18. The optical sensor of any preceding claim, wherein the sensor measures the pressure and temperature at a predetermined downhole location in an oil or gas well.

## Patentansprüche

1. Optischer Sensor mit mindestens zwei nahe beieinanderliegenden detektierenden Bereichen, wobei:
einer der detektierenden Bereiche ein druckfühlender Bereich ist und einen abgedichteten Hohlraum (20, 21) umfasst, der durch eine Röhre (12) festgelegt ist und der eine erste und eine zweite reflektierende Oberfläche (24, 28) hat, wobei sich der Abstand zwischen der ersten und der zweiten reflektierenden Oberfläche (24, 28) als Reaktion auf eine Druckänderung ändert, und wobei ein erstes reflektiertes Licht (38) und ein zweites reflektiertes Licht (40) von den reflektierenden Oberflächen (24, 28) ein interferometrisches Signal bilden, das für den am Ort des optischen Sensors herrschenden Druck charakteristisch ist;
**dadurch gekennzeichnet ist, dass**:
der optische Sensor einen einheitlichen Aufbau hat, der einen einkoppelnden Wellenleiter (22), der betriebstechnisch mit dem abgedichteten Hohlraum (20, 21) verbunden ist, um Licht in die abgedichtete Kammer (20, 21) zu projizieren, und eine Kapillarröhre (68), die teilweise in den Hohlraum (20, 21) hineinragt, umfasst, wobei die Röhre (12) mit dem einkoppelnden Wellenleiter (22) und der Kapillarröhre (68) verschmolzen ist; und
der andere detektierende Bereich ein temperaturfühlender Bereich ist, der in der Kapillarröhre (68) angeordnet ist, wobei der temperaturfühlende Bereich eine dritte reflektierende Oberfläche (30) umfasst und das zweite reflektierte Licht (40) und ein drittes reflektiertes Licht (44) von der dritten reflektierenden Oberfläche (30) ein interferometrisches Signal bilden, das für die am Ort des optischen Sensors herrschende Temperatur charakteristisch ist.

2. Optischer Sensor nach Anspruch 1, wobei sich der temperaturfühlende Bereich innerhalb des abgedichteten Hohlraums (21) befindet.

3. Optischer Sensor nach Anspruch 1 oder 2, wobei der temperaturfühlende Bereich aus einem temperaturempfindlichen Material hergestellt ist.

4. Optischer Sensor nach Anspruch 3, wobei das temperaturempfindliche Material einen Teil der Hohlraumwand bildet.

5. Optischer Sensor nach einem vorhergehenden Anspruch, wobei der temperaturfühlende Bereich einen temperaturempfindlichen Wellenleiter oder eine temperaturempfindliche Faser (66) umfasst, der bzw. die in der Kapillarröhre (68) angeordnet ist.

6. Optischer Sensor nach Anspruch 5, wobei die temperaturempfindliche Faser (66) aus einer auf Quarzglas beruhenden Faser hergestellt ist.

7. Optischer Sensor nach einem vorhergehenden Anspruch, wobei der abgedichtete Hohlraum (21) durch die Röhre (12), den einkoppelnden Wellenleiter (22) und ein distales Element festgelegt ist und wobei die Röhre (12) mit dem distalen Element versiegelt ist.

8. Optischer Sensor nach einem vorhergehenden Anspruch, wobei der Hohlraum (21) ein Gas oder einen Unterdruck enthält.

9. Optischer Sensor nach einem vorhergehenden Anspruch, wobei die Röhre (12) und die Kapillarröhre (68) aus Materialien mit ähnlichen thermischen Ausdehnungskoeffizienten hergestellt sind.

10. Optischer Sensor nach Anspruch 9, wobei die Röhre (12) einen Hohlraum (20) festlegt und sowohl der einkoppelnde Wellenleiter (22) als auch die Kapillarröhre (68) teilweise in den Hohlraum (20) hineinragen.

11. Optischer Sensor nach Anspruch 9 oder 10, wobei die Strecke, über die sich die Kapillarröhre (68) in dem Hohlraum (20) erstreckt, im Wesentlichen gleich der Länge des Hohlraums (20) ist, um die Wärmeausdehnung auf der Strecke zwischen der ersten und der zweiten reflektierenden Oberfläche (24, 28) auszugleichen.

12. Optischer Sensor nach Anspruch 9, 10, oder 11, wobei die Röhre (12) und die Kapillarröhre (68) aus demselben Material hergestellt sind.

13. Optischer Sensor nach Anspruch 12, wobei die Röhre (12) und die Kapillarröhre (68) aus Quarzglas hergestellt sind.

14. Optischer Sensor nach einem vorhergehenden Anspruch, wobei die Kapillarröhre (68) ferner einen hohlen Abschnitt (70) umfasst.

15. Optischer Sensor nach einem vorhergehenden Anspruch, wobei das distale Ende der Kapillarröhre modifiziert ist, um das reflektierte Licht zu minimieren.

16. Optischer Sensor nach Anspruch 15, wobei das distale Ende der Kapillarröhre (68) geschlitzt, abgeschrägt, gebogen, angewinkelt oder geschliffen ist.

17. Optischer Sensor nach Anspruch 15, wobei das distale Ende (74) der Kapillarröhre (68) mit einem Metall beschichtet ist.

18. Optischer Sensor nach einem der vorhergehenden Ansprüche, wobei der Sensor den Druck und die Temperatur an einem vorgegebenen Ort in einem Bohrloch einer Erdöl- oder Erdgasbohrung misst.

## Revendications

1. Capteur optique comprenant au moins deux régions de détection situées à proximité l'une de l'autre, dans lequel :
- une des régions de détection est une région de détection de pression et comprend une cavité étanche (20, 21) définie par un tube (12) et comportant une première et une seconde surface réfléchissante (24, 28), la distance entre les première et seconde surface réfléchissantes (24, 28) changeant en fonction d'un changement de pression, tandis qu'une première lumière réfléchie (38) et une seconde lumière réfléchie (40) desdites surfaces réfléchissantes (24, 28) forment un signal interférométrique représentatif d'une pression à l'emplacement du capteur optique ;
**caractérisé en ce que** :
- le capteur optique possède une structure unitaire comprenant un guide d'onde de lancement (22) connecté fonctionnellement à la cavité étanche (20, 21) afin de projeter de la lumière dans la chambre étanche (20, 21), et un tube capillaire (68) s'étendant partiellement dans la cavité (20, 21), lequel tube (12) est fusionné au guide d'onde de lancement (22) et au tube capillaire (68) ; et
- l'autre région de détection est une région de détection de température située dans le tube capillaire (68), laquelle région de détection de température comprend une troisième surface réfléchissante (30), tandis que la seconde lumière réfléchie (40) et une troisième lumière réfléchie (44) de la troisième surface réfléchissante (30) forment un signal interférométrique représentatif d'une température à l'emplacement du capteur optique.

2. Capteur optique selon la revendication 1, dans lequel la région de détection de température se situe dans la cavité étanche (21).

3. Capteur optique selon les revendications 1 ou 2, dans lequel la région de détection de température est faite d'un matériau sensible à la température.

4. Capteur optique selon la revendication 3, dans lequel le matériau sensible à la température forme une partie de la paroi de la cavité.

5. Capteur optique selon l'une quelconque des revendications précédentes, dans lequel la région de détection de température comprend un guide d'onde ou une fibre sensible à la température (66) se situant dans le tube capillaire (68).

6. Capteur optique selon la revendication 5, dans lequel la fibre sensible à la température (66) est faite d'une fibre à base de silice fondue.

7. Capteur optique selon l'une quelconque des revendications précédentes, dans lequel la cavité étanche (21) est définie par le tube (12), le guide d'onde de lancement (22) et un élément distal, et dans lequel le tube (12) est scellé à l'élément distal.

8. Capteur optique selon l'une quelconque des revendications précédentes, dans lequel ladite cavité (21) contient un gaz ou un vide partiel.

9. Capteur optique selon l'une quelconque des revendications précédentes, dans lequel le tube (12) et le tube capillaire (68) sont faits de matériaux ayant des coefficients de dilatation thermique similaires.

10. Capteur optique selon la revendication 9, dans lequel le tube (12) définit une cavité (20), tandis que le guide d'onde de lancement (22) et le tube capillaire (68) s'étendent tous deux partiellement dans la cavité (20).

11. Capteur optique selon les revendications 9 ou 10, dans lequel la longueur sur laquelle le tube capillaire (68) s'étend dans la cavité (20) est essentiellement proche de la longueur de la cavité (20) afin de compenser la dilatation thermique sur la distance entre les première et seconde surfaces réfléchissantes (24, 28).

12. Capteur optique selon les revendications 9, 10 ou 11, dans lequel le tube (12) et le tube capillaire (68) sont faits du même matériau.

13. Capteur optique selon la revendication 12, dans lequel le tube (12) et le tube capillaire (68) sont faits de silice fondue.

14. Capteur optique selon l'une quelconque des revendications précédentes, dans lequel le tube capillaire (68) comprend en outre une partie creuse (70).

15. Capteur optique selon l'une quelconque des revendications précédentes, dans lequel l'extrémité distale du tube capillaire (68) est modifiée de manière à minimiser la lumière réfléchie.

16. Capteur optique selon la revendication 15, dans lequel l'extrémité distale du tube capillaire (68) est clivée, conique, courbée, inclinée ou polie.

17. Capteur optique selon la revendication 15, dans lequel l'extrémité distale (74) du tube capillaire (68) est recouverte d'un métal.

18. Capteur optique selon l'une quelconque des revendications précédentes, dans lequel le capteur mesure la pression et la température en un emplacement de fond de puits prédéterminé dans un puits de pétrole ou de gaz.
